# FASCICULE DE BREVET EUROPEEN

(11) **EP 2 406 625 B1**
(45) Date de publication et mention de la délivrance du brevet: **27.06.2018**
(21) Numéro de dépôt: 10709823.8
(22) Date de dépôt: 12.03.2010
(51) Int. Cl.: G01N 29/24, G01N 29/28

(54) **DISPOSITIF ET PROCÉDÉ DE CONTRÔLE NON-DESTRUCTIF PAR ULTRASONS DE STRUCTURES COMPLEXES**
VORRICHTUNG UND VERFAHREN ZUR NICHTDESTRUKTIVEN ÜBERWACHUNG KOMPLEXER STRUKTUREN UNTER VERWENDUNG VON ULTRASCHALLWELLEN
DEVICE AND METHOD FOR THE NONDESTRUCTIVE MONITORING OF COMPLEX STRUCTURES USING ULTRASONIC WAVES

(30) Priorité: 12.03.2009 FR 0951560
(43) Date de publication de la demande: 18.01.2012
(73) Titulaire: AIRBUS (SAS), 31700 Blagnac (FR)
(72) Inventeur: ITHURRALDE, Guillaume, F-31770 Colomiers (FR)
(74) Mandataire: Gicquel, Olivier Yves Gérard
(86) Numéro de dépôt international: PCT/EP2010/053172
(87) Numéro de publication internationale: WO 2010/103098

(56) Documents cités:
- EP-A1- 1 950 559
- EP-A2- 1 744 157
- FR-A1- 2 891 909
- US-A- 5 728 937
- US-A1- 2007 017 297

## Description

La présente invention appartient au domaine du contrôle non-destructif par ultrasons de structures, et concerne plus particulièrement un dispositif et un procédé de contrôle non-destructif par ultrasons d'une structure complexe en immersion locale ou totale dans un milieu de couplage liquide, tel que de l'eau.

De nos jours, les procédés de contrôle non-destructif, notamment par ultrasons, sont mis en oeuvre dans de nombreux domaines industriels tels que les domaines de l'aéronautique, du nucléaire, du naval, etc.

Les procédés de contrôle non-destructif par ultrasons consistent généralement à émettre au moyen d'une sonde des ondes ultrasonores en direction d'une structure, et à mesurer des caractéristiques desdites ondes ultrasonores, soit après réflexion par la structure, soit après transmission à travers la structure.

Dans le cas où la sonde n'est pas en appui sur la structure, les procédés de contrôle non-destructif nécessitent un suivi de profil de la structure à contrôler. Le suivi de profil est nécessaire par exemple pour maintenir un angle d'incidence des ondes ultrasonores sur la structure sensiblement constant, et/ou pour limiter les fuites de liquide de couplage dans le cas d'un contrôle par immersion locale de la structure.

De nos jours, des structures de plus en plus complexes font leur apparition, et rendent le suivi de profil compliqué. Par exemple il n'est pas rare pour une structure de voilure ou de fuselage d'avion d'avoir des géométries différentes suivant la zone considérée, géométries qui sont dictées par la fonction de la structure (courbure, plan brisé, etc.) ou dues à la présence de fonctions intégrées dans la structure (raidisseur, bords tombé, etc.). Il n'est pas rare non plus d'avoir une épaisseur différente suivant la zone considérée.

En pratique, il est nécessaire pour contrôler de telles structures de considérer une pluralité de sondes ultrasonores de caractéristiques différentes, chaque sonde étant spécialisée pour une zone spécifique de la structure.

Le suivi de profil et les changements de sonde tendent à augmenter la durée des opérations de contrôle non-destructif des structures complexes, et les cadences de production sont par conséquent pénalisées.

La présente invention se propose de résoudre les problèmes susmentionnés au moyen du dispositif, selon la revendication 1, et du procédé, selon la revendication 7, de contrôle non-destructif par ultrasons adaptés au contrôle automatisé de telles structures.

De préférence, le dispositif comporte des moyens de mémorisation d'informations associant un élément terminal et un mode d'activation à chaque zone à contrôler. De préférence, les informations associent une zone de géométrie standard à chaque zone à contrôler de la structure.

De préférence, la surface propre de chaque élément terminal comporte un patin déformable.

Avantageusement, le dispositif comporte une pluralité de jeux d'éléments terminaux différents, chaque jeu étant adapté à des conditions particulières de contrôle.

La description suivante de modes de réalisation de l'invention est faite en se référant aux figures, qui représentent de manière non limitative :
- Figure 1 : une représentation schématique d'un dispositif de contrôle non-destructif par ultrasons selon l'invention,
- Figures 2a à 2e : des représentations schématiques en coupe de têtes de contrôle au contact utilisées dans l'invention,
- Figures 3a et 3b : des représentations schématiques en coupe de têtes de contrôle sans contact utilisées dans l'invention,
- Figure 4 : une représentation schématique d'un exemple de réseau de transducteurs élémentaires d'une sonde ultrasonore du dispositif de la figure 1.

Le domaine d'application préféré de l'invention, bien que nullement limitatif, est celui du contrôle non-destructif de structures mises en oeuvre dans l'aéronautique, en particulier de structures en matériau composite stratifié du type comportant des fibres maintenues par une résine thermodurcissable ou thermoplastique hautes performances, ou de structures métalliques (acier, titane, aluminium, etc.).

La présente invention concerne un contrôle non-destructif ultrasonore par couplage liquide. De manière connue de l'homme de l'art, un tel couplage liquide s'obtient par immersion totale ou partielle d'une structure dans une cuve contenant le couplant liquide, de préférence de l'eau, ou par immersion locale de la structure par apport continu du couplant liquide entre une sonde ultrasonore et la structure à contrôler (boîtes à eau, jets d'eau, etc.).

On considère dans la suite de l'exposé le cas d'un contrôle d'une structure 5, dite « complexe », comportant une pluralité de zones à contrôler non toutes de même géométrie.

« Géométrie » est ici à comprendre au sens large, c'est-à-dire non seulement la géométrie d'une surface locale d'une face avant d'une zone, la face avant étant la face du côté d'une sonde émettant des ondes ultrasonores en direction de la structure 5, mais également l'épaisseur de la zone, l'inclinaison locale entre la face avant et une face arrière de la zone, etc.

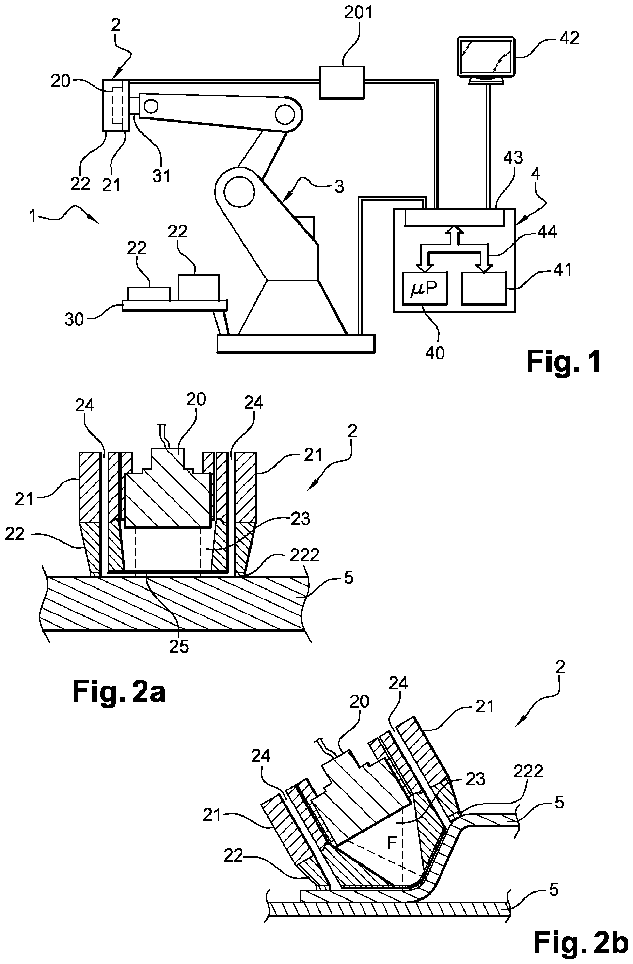

Un exemple de dispositif 1 de contrôle non-destructif par ultrasons selon l'invention, adapté à un contrôle par réflexion, est représenté de façon schématique sur la figure 1.

Selon l'invention, le dispositif 1 de contrôle non-destructif par ultrasons comporte une tête de contrôle 2, un automate 3 pour déplacer la tête de contrôle 2, et une unité de commande 4 pour piloter le fonctionnement dudit dispositif.

Au cours des opérations de contrôle, la tête de contrôle 2 est soit en appui sur la structure 5 et le contrôle est dit « au contact », soit sans appui sur la structure 5 et le contrôle est dit « sans contact ».

La tête de contrôle 2 comporte principalement une sonde 20 ultrasonore montée sur un support 21 et un élément terminal 22 amovible. L'élément terminal 22 est fixé au support 21 par des moyens adaptés pour un montage/démontage par l'automate 3 sans intervention d'un opérateur.

L'élément terminal 22 comporte une première extrémité 220 et une seconde extrémité 221, opposée à la première extrémité et fixée au support 21 lors des opérations de contrôle de la structure 5.

La seconde extrémité 221 coopère avec le support 21 dans lequel elle s'emboîte. Suivant d'autres modes de réalisation non limitatifs, la fixation est réalisée au moyen d'électro-aimants (par exemple agencés sur le support 21 et/ou sur l'élément terminal 22), par vissage, par baïonnette, etc.

De préférence, les dimensions de l'élément terminal 22 sont choisies pour assurer que les ondes ultrasonores émises par la sonde 20 parcourent une distance prédéfinie avant d'être réfléchies par la zone à contrôler. Par exemple la hauteur de l'élément terminal 22, mesurée entre la première extrémité 220 et la seconde extrémité 221, est choisie de sorte que le temps de propagation aller/retour des ondes ultrasonores dans le liquide de couplage soit supérieur au temps de propagation aller/retour des ondes ultrasonores dans la structure 5.

La première extrémité 220 de l'élément terminal 22 forme une surface géométriquement adaptée à une surface locale d'une zone à contrôler, c'est-à-dire que la surface formée par la première extrémité 220 et la surface locale ont localement sensiblement la même géométrie, pour assurer le suivi de profil de la structure 5 par la tête de contrôle 2, que le contrôle soit réalisé au contact ou sans contact.

Pour les besoins de la description de modes de réalisation de l'élément terminal 22, on considère dans un premier temps le cas non limitatif d'un contrôle au contact en immersion locale.

Dans le cas d'un contrôle au contact, la surface formée par la première extrémité 220 est dite « surface d'appui » du fait qu'elle est destinée à prendre appui et à glisser sur la surface locale de la zone à contrôler de la structure 5. L'élément terminal 22 est également destiné à provoquer l'incidence nécessaire du faisceau d'ondes ultrasonores émises par la sonde 20 sur la surface locale de la zone à contrôler, de préférence une incidence sensiblement normale dans le cas de matériaux composites stratifiés.

Les figures 2a à 2e représentent schématiquement des exemples non limitatifs d'éléments terminaux 22 du dispositif 1 de contrôle non-destructif.

La figure 2a représente un élément terminal 22 géométriquement adapté à une zone comportant une surface locale sensiblement plane.

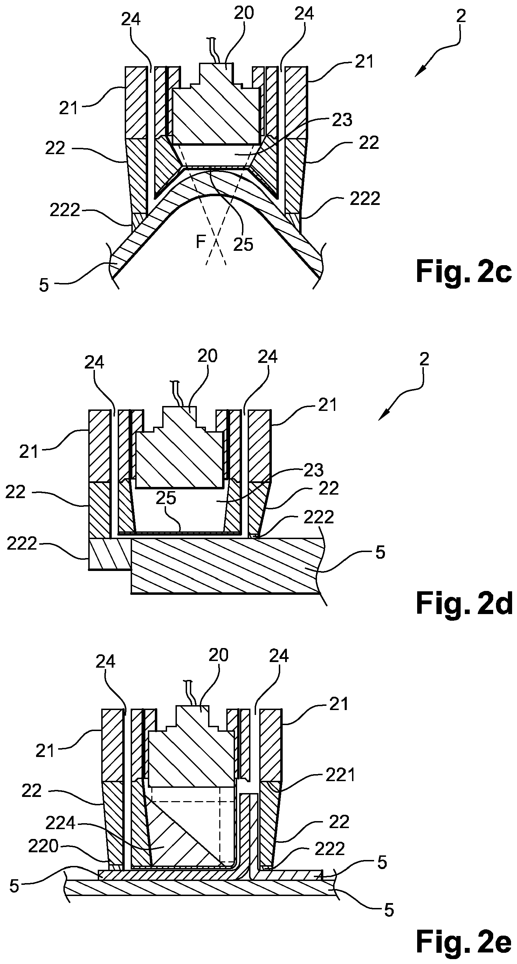

Les figures 2b et 2c représentent des éléments terminaux 22 géométriquement adaptés à des zones comportant une surface locale respectivement convexe (base d'un raidisseur oméga) et concave.

La figure 2d représente un élément terminal 22 géométriquement adapté à une zone de bord comportant localement une face avant et un bord sensiblement plans, orthogonaux entre eux.

La figure 2e représente un élément terminal 22 géométriquement adapté à une zone comportant un raidisseur en T, ledit élément terminal comportant un miroir interne 224 pour assurer une incidence sensiblement normale des ondes ultrasonores sur les parois transversales dudit raidisseur.

Dans un mode préféré de réalisation, l'élément terminal 22 comporte une paroi périmétrique entre les première 220 et seconde 221 extrémités.

Lorsque l'élément terminal 22 est fixé au support 21 et lorsque la tête de contrôle 2 est en appui sur la surface locale de la structure 5 avec laquelle la surface d'appui est géométriquement adaptée, l'élément terminal 22, le support 21, la sonde 20 et la structure 5 délimitent une chambre de couplage 23 essentiellement fermée. La chambre de couplage 23 comporte des ouvertures 24 qui sont utilisées pour le remplissage continu de la chambre de couplage 23 en liquide de couplage.

De préférence, la surface d'appui de la première extrémité 220 comporte un patin 222 déformable, tel qu'un joint périmétrique, pour faciliter le glissement de la tête de contrôle 2 sur la structure 5 et pour limiter les pertes de liquide de couplage.

Dans un mode préféré de réalisation, la chambre de couplage 23 comporte une membrane 25 transversale en vis-à-vis de la sonde 20, délimitant une première chambre de couplage, du côté de ladite sonde, et une seconde chambre de couplage du côté de la structure 5, de volume de préférence sensiblement inférieur à celui de la première chambre de couplage.

La membrane 25 est imperméable au liquide couplage et est sensiblement transparente dans le domaine ultrasonore. Il s'agit par exemple d'une feuille de latex d'épaisseur comprise entre 0.1mm et 0.2mm et d'impédance acoustique proche de celle du liquide de couplage. Ce mode est avantageux du fait que seul le remplissage de la seconde chambre de couplage en liquide couplage doit s'effectuer en continu lors des opérations de contrôle, la première chambre de couplage étant remplie de préférence au début des opérations de contrôle.

De manière plus générale, la contention du liquide de couplage, c'est-à-dire le fait que la chambre de couplage 23 doive être essentiellement fermée, correspond au cas d'une immersion locale. Suivant d'autres modes de réalisation, pouvant être mis en oeuvre pour un contrôle au contact en immersion totale ou partielle, l'élément terminal 22 comporte une paroi semi-périmétrique, par exemple en forme de U, ou comporte au moins deux parties proéminentes assurant des points d'appui sur la structure 5, etc.

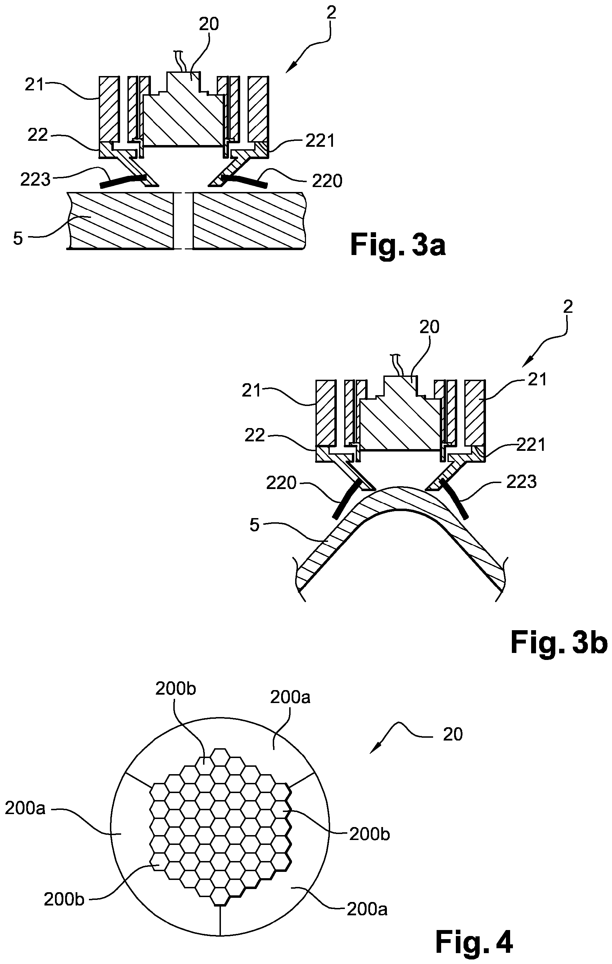

De manière encore plus générale, les éléments terminaux 22 sont suivant d'autres modes de réalisation adaptés à un contrôle sans contact, par exemple par jet d'eau. Des exemples de tels éléments terminaux sont visibles sur les figures 3a et 3b, pour une surface locale respectivement plane et concave. La première extrémité 220 est de préférence en forme de buse et comporte une jupette 223 souple ou semi-rigide, géométriquement adaptée à la surface locale de la zone à contrôler. Au cours des opérations de contrôle, la jupette 223 est maintenue sensiblement parallèle à ladite surface locale pour limiter les fuites d'eau et assurer le couplage acoustique.

Selon l'invention, le dispositif 1 de contrôle non-destructif comporte une pluralité d'éléments terminaux 22 interchangeables, géométriquement adaptés à des zones différentes de la structure 5. Les éléments terminaux 22 sont par exemple disposés sur un pupitre 30 accessible par l'automate 3 portant la tête de contrôle 2. Chaque élément terminal 22 comporte une interface commune à tous les éléments terminaux, formée par la seconde extrémité 221, destinée à coopérer avec le support 21.

De préférence, le dispositif 1 comporte une pluralité de jeux d'éléments terminaux 22, chaque jeu étant adapté à des conditions particulières de contrôle. Par exemple le dispositif 1 comporte un jeu pour un contrôle sans contact, un jeu pour un contrôle au contact en immersion locale, en immersion totale, etc.

Du fait de cette pluralité d'éléments terminaux 22 interchangeables, pouvant être montés/démontés sur le support 21 par de simples opérations effectuées par l'automate 3, le dispositif 1 de contrôle non-destructif par ultrasons est adapté au contrôle automatisé de structures complexes.

La sonde 20 ultrasonore du dispositif 1 de contrôle non-destructif comporte un réseau matriciel de transducteurs élémentaires 200a, 200b, de préférence réalisés en matériau piézoélectrique.

Les transducteurs élémentaires 200a, 200b sont configurés au moyen d'une électronique multivoie 201 adaptée pour activer individuellement chacun desdits transducteurs élémentaires en émission et/ou en réception. De préférence tout ou partie des transducteurs élémentaires peuvent être activés à la fois en émission et en réception.

Dans l'exemple non limitatif représenté sur la figure 4, la sonde 20 comporte un réseau bidimensionnel sensiblement circulaire, de préférence sensiblement plan, comportant trois transducteurs élémentaires périphériques 200a qui ne sont activables qu'en émission, et une pluralité de transducteurs élémentaires centraux 200b, de dimensions sensiblement inférieures à celles des transducteurs élémentaires périphériques 200a, qui sont activables à la fois en émission et en réception.

L'électronique multivoie 201 est adaptée pour configurer le réseau matriciel de transducteurs élémentaires 200a, 200b suivant une pluralité de modes d'activation différents, chaque mode d'activation étant défini au moins par une surface active en émission et une surface active en réception.

Une surface active en émission correspond à un ensemble de transducteurs activés simultanément en émission, et une surface active en réception correspond à un ensemble de transducteurs dont les signaux électriques en sortie sont combinés entre eux, par exemple par l'électronique multivoie 201.

L'électronique multivoie 201 est de préférence également adaptée pour effectuer un balayage électronique des surfaces actives en émission et en réception, c'est-à-dire pour déplacer séquentiellement la surface active en émission et/ou la surface active en réception au sein du réseau de transducteurs élémentaires 200a, 200b. Un mode d'activation est, le cas échéant, également défini par le balayage électronique des surfaces actives en émission et en réception.

De préférence, l'électronique multivoie 201 est également adaptée pour appliquer des retards différents aux signaux électriques sur chaque transducteur élémentaire 200a, 200b d'une même surface active d'émission et/ou de réception, afin de modifier la direction privilégiée des ondes ultrasonores ou de focaliser le faisceau ultrasonore. Suivant d'autres modes de réalisation, l'électronique multivoie 201 est également adaptée pour pondérer la tension des signaux électriques sur chaque transducteur élémentaire pour réduire les lobes secondaires du diagramme de rayonnement en émission et/ou le gain en réception. Un mode d'activation est, le cas échéant, également défini par les retards appliqués et/ou les pondérations appliquées aux signaux électriques sur chaque transducteur élémentaire d'une même surface active d'émission et/ou de réception.

Du fait de la pluralité de modes d'activation différents, il est possible de sélectionner un mode d'activation adapté à chaque zone à contrôler de la structure 5, en fonction de la géométrie de cette zone à contrôler, c'est-à-dire en fonction de l'une au moins des caractéristiques suivantes : la géométrie de la surface locale, l'épaisseur de la structure 5, l'inclinaison locale entre la face avant et la face arrière de la structure 5, etc. En outre, l'adaptation de la sonde 20 à la zone à contrôler est obtenue rapidement par configuration de l'électronique multivoie 201.

Par exemple, en fonction de la géométrie de la zone à contrôler, on sélectionne un mode d'activation dont la surface active en émission et/ou les retards appliqués à chaque transducteur élémentaire 200a, 200b de ladite surface active en émission sont configurés de sorte à former un front d'onde géométriquement adapté à la surface locale de la zone à contrôler. En d'autres termes, la surface active en émission et/ou les retards appliqués à chaque transducteur élémentaire 200a, 200b de ladite surface active en émission sont configurés de sorte à avoir une incidence sensiblement normale en tout point de la surface locale de cette zone à contrôler.

Dans l'exemple représenté sur la figure 2a, le mode d'activation sélectionné est tel que les rayons ultrasonores émis par la sonde 20, représentés en traits discontinus, sont sensiblement parallèles et le front d'onde est sensiblement plan.

Dans les exemples représentés sur les figures 2b et 2c, le mode d'activation sélectionné est tel que les rayons ultrasonores convergent en un point de focalisation virtuel F sensiblement confondu avec un centre de courbure de la surface locale de la structure 5.

Dans l'exemple de la figure 2b, le point F se trouve entre la sonde 20 et la face avant de la structure 5. Les rayons ultrasonores, après s'être croisés, divergent et forment un front d'onde sensiblement sphérique centré en F, géométriquement adapté à la surface locale convexe.

Dans l'exemple de la figure 2c, le point F se trouve, par rapport à la sonde 20, après la face avant de la structure 5, et les rayons ultrasonores forment un front d'onde géométriquement adapté à la surface locale concave.

Dans le cas d'un contrôle d'une structure en matériau anisotrope, telle qu'une structure en matériau composite stratifié, le dispositif 1 est de préférence configuré de sorte que la structure 5 se trouve entre 0.5 et 1.5 fois la limite de champ proche du faisceau ultrasonore formé par la sonde 20 (ou du point F si une loi de retards focalisante a été utilisée). Le mode d'activation est de préférence sélectionné de sorte à placer la limite de champ proche entre les faces avant et arrière de la structure 5, et la sélection du mode d'activation s'effectue en fonction de l'épaisseur de ladite structure dans la zone considérée.

De manière plus générale, une augmentation de la superficie de la surface active en émission entraîne une augmentation de la directivité du faisceau ultrasonore émis. Augmenter la directivité permet de maximiser l'énergie émise dans la direction privilégiée, ce qui est avantageux notamment dans le cas d'un contrôle d'une zone épaisse et absorbante. De préférence, plus l'épaisseur de la structure dans la zone considérée sera importante, plus le nombre de transducteurs élémentaires de la surface active en émission du mode d'activation sélectionné sera important.

Augmenter la superficie de la surface active en réception permet, via la combinaison des signaux électriques en sortie de plusieurs transducteurs élémentaires 200b, d'améliorer un rapport signal sur bruit en réception et donc de détecter des défauts plus petits qu'avec un seul transducteur élémentaire 200b, et/ou de détecter des ondes ultrasonores fortement atténuées dans le cas d'une zone épaisse.

Le mode d'activation est par exemple sélectionné en fonction de la précision avec laquelle les défauts sont à dimensionner, précision qui dépend notamment, de manière connue de l'homme de l'art, des dimensions des surfaces actives en émission et en réception, mais aussi des lois de retards.

Si la vitesse du contrôle est privilégiée par rapport à la précision, une augmentation des superficies des surfaces actives en émission et en réception permet d'accélérer ledit contrôle de la zone considérée, du fait que des superficies plus importantes sont contrôlées simultanément.

L'automate 3, connu en lui-même de l'homme de l'art, est mis en oeuvre pour déplacer la tête de contrôle 2 dans l'espace, afin de la positionner au voisinage d'une zone à contrôler (au contact ou sans contact), mais également pour remplacer l'élément terminal 22 par un autre élément terminal pour assurer le suivi de profil de la structure 5 à contrôler.

On comprend donc que le choix d'un mode d'activation adapté à la géométrie de la zone considérée de la structure 5 permet d'améliorer les performances du contrôle dans le cas d'une structure complexe.

Dans un mode préféré de réalisation, l'automate 3 comporte un robot à six axes articulaires portant un effecteur 31 duquel la tête de contrôle 2 est solidaire. Pour des structures de grandes dimensions, le robot à six axes est de préférence monté sur un axe linéaire supplémentaire ou sur une plateforme mobile.

L'automate 3 comporte de préférence un ou des capteurs de position mis en oeuvre par l'unité de commande 4 pour estimer la position de la tête de contrôle 2 par rapport à la structure 5.

L'unité de commande 4 du dispositif 1 comporte des moyens de commande de l'automate 3, en particulier des déplacements de la tête de contrôle 2 et des remplacements de l'élément terminal 22 par ledit automate, et des moyens de configuration de la sonde 20 via l'électronique multivoie 201. L'unité de commande 4 comporte également des moyens de sélection d'un élément terminal 22 et des moyens de sélection d'un mode d'activation en fonction d'une géométrie d'une zone à contrôler.

Dans un mode préféré de réalisation, l'unité de commande 4 est un micro-ordinateur de type PC, comportant un microprocesseur 40, des moyens de mémorisation tels qu'une mémoire électronique 41, des périphériques 42 tel qu'un écran de visualisation, ainsi que des entrées-sorties 43 couplées à l'automate 3 et à l'électronique multivoie 201. Le microprocesseur 40, la mémoire électronique 41 et les entrées-sorties 43 sont reliés par un bus de données 44.

La mémoire électronique 41 comporte une première zone mémoire dans laquelle sont mémorisées des instructions qui sont exécutées par le microprocesseur 40 pour sélectionner un élément terminal 22 et un mode d'activation en fonction d'une géométrie d'une zone à contrôler, pour commander la fixation par l'automate 3 de l'élément terminal 22 sélectionné à la tête de contrôle 2, et pour configurer la sonde 20 avec le mode d'activation sélectionné via l'électronique multivoie 201.

De préférence, la sélection est effectuée au moyen d'informations, mémorisées dans une seconde zone mémoire de la mémoire électronique 41, associant un élément terminal 22 et un mode d'activation à chaque zone à contrôler. Ces informations sont par exemple mémorisées sous la forme d'une table de correspondances.

Suivant un autre exemple, ces informations se présentent sous la forme de deux tables de correspondances : une première table associant les zones à contrôler à des zones de géométrie standard, et une seconde table associant les éléments terminaux 22 et les modes d'activation auxdites zones de géométrie standard.

Ces informations sont de préférence déterminées automatiquement par l'unité de commande 4, par exemple sur la base d'un fichier CAO décrivant la structure 5. Suivant d'autres modes de réalisation, ces informations sont déterminées par un opérateur.

L'invention concerne également un procédé de contrôle non-destructif par ultrasons d'une structure 5 comportant une pluralité de zones de géométries différentes, ledit procédé étant mis en oeuvre par le dispositif selon la revendication 1.

Le procédé de contrôle non-destructif comporte principalement les étapes suivantes :
a) sélection d'une zone à contrôler de la structure 5,
b) sélection d'un élément terminal 22 et d'un mode d'activation adaptés à la géométrie de la zone considérée,
c) fixation de l'élément terminal 22 sélectionné à la tête de contrôle 2 et configuration de la sonde 20 en fonction du mode d'activation sélectionné,
d) positionnement de la tête de contrôle au voisinage de la zone à contrôler (au contact ou sans contact) et inspection ultrasonore de ladite zone.

Suivant d'autres modes de mise en oeuvre, le procédé peut comporter d'autres étapes. Par exemple dans le cas d'un contrôle au contact en immersion locale, utilisant les têtes de contrôle 2 décrites en référence aux figures 2a à 2e, le procédé comporte le remplissage des première et seconde chambres de couplage, la première chambre de couplage étant remplie après l'étape c) et avant l'inspection de la zone, et la seconde chambre de couplage étant remplie au cours de l'étape d) après le positionnement et avant l'inspection de ladite zone.

Pour le contrôle de plusieurs zones de la structure 5, un mode préféré de mise en oeuvre du procédé consiste à répéter les étapes a), b), c) et d) pour chaque zone à contrôler de la structure 5.

Dans une variante, on détermine au cours de l'étape a) un ensemble de zones pouvant être inspectées en utilisant un même élément terminal 22, par exemple des zones dont les surfaces locales ont toutes sensiblement la même géométrie.

On sélectionne au cours de l'étape b) un élément terminal 22 à utiliser pour inspecter toutes les zones de l'ensemble. Le mode d'activation est de préférence déterminé individuellement pour chaque zone de l'ensemble, mais peut être le même pour toutes les zones de l'ensemble.

L'étape c) est inchangée et, au cours de l'étape d), on inspecte toutes les zones déterminées comme pouvant être inspectées avec le même élément terminal 22 et avec le mode d'activation sélectionné.

Les étapes a), b), c) et d) sont répétées pour chaque ensemble de zones pouvant être inspectées avec un même élément terminal 22.

La durée des opérations liées au remplacement de l'élément terminal 22 pouvant s'avérer non négligeable par rapport à la durée du contrôle de la structure 5 dans son ensemble, on comprend que ce mode est avantageux du fait que le nombre de remplacements de l'élément terminal est minimisé.

Dans un mode particulier de mise en oeuvre, le procédé comporte une étape préalable dans laquelle on détermine les informations associant un élément terminal 22 et un mode d'activation à chaque zone à contrôler. Par exemple on détermine, pour chaque zone à contrôler, la zone de géométrie standard dont la géométrie avoisine le plus celle de la zone à contrôler considérée, la géométrie de chaque zone à contrôler étant de préférence obtenue à partir d'un fichier CAO décrivant la structure 5.

L'invention, décrite dans le cas d'un contrôle par réflexion, est également applicable à un contrôle par transmission. Le dispositif 1 comporte dans ce cas au moins une première tête de contrôle 2 pour l'émission d'ondes ultrasonores et une seconde tête de contrôle 2 pour la réception d'ondes ultrasonores, de part et d'autre de la structure 5.

## Revendications

1. Dispositif (1) de contrôle non-destructif par ultrasons d'une structure (5) comportant une pluralité de zones de géométries différentes, ledit dispositif comportant :
- une sonde (20) ultrasonore pour émettre des ondes ultrasonores en direction de la structure (5),
- une tête de contrôle (2) à laquelle la sonde (20) est fixée,
- un automate (3) portant la tête de contrôle (2),
- une pluralité d'éléments terminaux (22), chaque élément terminal comportant une interface de fixation commune à tous les éléments terminaux (22) et une surface qui lui est propre géométriquement adaptée à une zone de la structure (5), **caractérisé en ce que** la sonde (20) comporte un réseau matriciel de transducteurs élémentaires (200a, 200b) pouvant être configurés suivant une pluralité de modes d'activation différents, chaque mode d'activation étant défini au moins par une surface active en émission et une surface active en réception,
et **en ce que** le dispositif (1) comporte :
- des moyens de sélection d'un élément terminal (22) parmi la pluralité d'éléments terminaux et des moyens de sélection d'un mode d'activation parmi la pluralité de modes d'activation de la sonde (20) en fonction d'une géométrie d'une zone de la structure (5),
- des moyens de commande d'une fixation par l'automate (3) de l'élément terminal (22) sélectionné à la tête de contrôle (2),
- des moyens de configuration de la sonde (20) avec le mode d'activation sélectionné.

2. Dispositif (1) selon la revendication 1, comportant des moyens de mémorisation (41) d'informations associant un élément terminal (22) et un mode d'activation à chaque zone à contrôler.

3. Dispositif (1) selon la revendication 2, dans lequel les informations associent une zone de géométrie standard à chaque zone à contrôler de la structure (5).

4. Dispositif (1) selon l'une des revendications précédentes, dans lequel la surface propre de chaque élément terminal comporte un patin (222) déformable.

5. Dispositif (1) selon l'une des revendications précédentes, comportant une pluralité de jeux d'éléments terminaux (22), chaque jeu étant adapté à des conditions particulières de contrôle.

6. Dispositif (1) selon l'une des revendications précédentes, dans lequel un mode d'activation de la sonde est défini en outre par des retards appliqués et/ou des pondérations appliquées aux signaux électriques sur chaque transducteur élémentaire d'une même surface active d'émission et/ou de réception.

7. Procédé de contrôle non-destructif par ultrasons d'une structure (5), mis en oeuvre par le dispositif (1) conforme à l'une des revendications 1 à 6, **caractérisé en ce qu'**il comporte les étapes de :
a) sélection d'une zone à contrôler de la structure (5),
b) sélection d'un élément terminal (22) et sélection d'un mode d'activation de la sonde (20) en fonction d'une géométrie de la zone à contrôler,
c) fixation de l'élément terminal (22) sélectionné à la tête de contrôle (2) et configuration de la sonde (20) en fonction du mode d'activation sélectionné,
d) positionnement de la tête de contrôle (2) au voisinage de la zone à contrôler et inspection ultrasonore de ladite zone,
dans lequel chaque mode d'activation de la sonde est défini au moins par une surface active en émission et une surface active en réception.

8. Procédé selon la revendication 7, dans lequel les étapes a), b), c) et d) sont répétées pour chaque zone à contrôler de la structure (5).

9. Procédé selon la revendication 7, dans lequel on sélectionne au cours de l'étape a) un ensemble de zones contrôlables avec un même élément terminal (22), on sélectionne au cours de l'étape b) un élément terminal (22) en fonction des géométries des zones de l'ensemble, et l'étape d) est exécutée avec le même élément terminal (22) pour toutes les zones de l'ensemble.

10. Procédé selon l'une des revendications 7 à 9, comportant une étape préalable de détermination d'informations associant un élément terminal (22) et un mode d'activation de la sonde (20) à chaque zone à contrôler de la structure (5).

## Patentansprüche

1. Vorrichtung (1) zur zerstörungsfreien Ultraschallprüfung einer Struktur (5), die eine Vielzahl von Zonen unterschiedlicher Geometrie aufweist, wobei die Vorrichtung aufweist:
- eine Ultraschallsonde (20) zur Emission von Ultraschallwellen in Richtung der Struktur (5),
- einen Prüfkopf (2), an dem die Sonde (20) befestigt ist,
- einen den Prüfkopf (2) tragenden Automaten (3),
- eine Vielzahl von Endelementen (22), wobei jedes Endelement eine allen Endelementen (22) gemeinsame Befestigungsschnittstelle und eine ihm eigene Fläche aufweist, die geometrisch an eine Zone der Struktur (5) angepasst ist,
**dadurch gekennzeichnet, dass** die Sonde (20) eine Matrixschaltung von Elementarwandlern (200a, 200b) aufweist, die gemäß einer Vielzahl unterschiedlicher Aktivierungsmodi konfiguriert sein können, wobei jeder Aktivierungsmodus mindestens durch eine sendeaktive Fläche und eine empfangsaktive Fläche definiert wird,
und dass die Vorrichtung (1) aufweist:
- Auswahleinrichtungen eines Endelements (22) aus der Vielzahl von Endelementen und Auswahleinrichtungen eines Aktivierungsmodus aus der Vielzahl von Aktivierungsmodi der Sonde (20) abhängig von einer Geometrie einer Zone der Struktur (5),
- Steuereinrichtungen einer Befestigung des ausgewählten Endelements (22) am Prüfkopf (2) durch den Automaten (3),
- Konfigurationseinrichtungen der Sonde (20) mit dem ausgewählten Aktivierungsmodus.

2. Vorrichtung (1) nach Anspruch 1, die Speichereinrichtungen (41) von Informationen aufweist, die jeder zu prüfenden Zone ein Endelement (22) und einen Aktivierungsmodus zuordnen.

3. Vorrichtung (1) nach Anspruch 2, wobei die Informationen jeder zu prüfenden Zone der Struktur (5) eine Zone mit Standard-Geometrie zuordnen.

4. Vorrichtung (1) nach einem der vorhergehenden Ansprüche, wobei die eigene Fläche jedes Endelements einen verformbaren Gleiter (222) aufweist.

5. Vorrichtung (1) nach einem der vorhergehenden Ansprüche, die eine Vielzahl von Sätzen von Endelementen (22) aufweist, wobei jeder Satz für besondere Prüfbedingungen geeignet ist.

6. Vorrichtung (1) nach einem der vorhergehenden Ansprüche, wobei ein Aktivierungsmodus der Sonde außerdem durch auf jedem Elementarwandler einer gleichen aktiven Sende- und/oder Empfangsfläche an die elektrischen Signale angewendete Verzögerungen und/oder angewendete Gewichtungen definiert wird.

7. Verfahren zur zerstörungsfreien Ultraschallprüfung einer Struktur (5), durchgeführt durch die Vorrichtung (1) nach einem der Ansprüche 1 bis 6, **dadurch gekennzeichnet, dass** es die folgenden Schritte aufweist:
a) Auswahl einer zu prüfenden Zone der Struktur (5),
b) Auswahl eines Endelements (22) und Auswahl eines Aktivierungsmodus der Sonde (20) abhängig von einer Geometrie der zu prüfenden Zone,
c) Befestigung des ausgewählten Endelements (22) am Prüfkopf (2) und Konfiguration der Sonde (20) abhängig vom ausgewählten Aktivierungsmodus,
d) Positionierung des Prüfkopfs (2) in der Nähe der zu prüfenden Zone und Ultraschallinspektion der Zone,
wobei jeder Aktivierungsmodus der Sonde mindestens durch eine sendeaktive Fläche und eine empfangsaktive Fläche definiert wird.

8. Verfahren nach Anspruch 7, wobei die Schritte a), b), c) und d) für jede zu prüfende Zone der Struktur (5) wiederholt werden.

9. Verfahren nach Anspruch 7, wobei während des Schritts a) eine Einheit von prüfbaren Zonen mit einem gleichen Endelement (22) ausgewählt wird, während des Schritts b) ein Endelement (22) abhängig von den Geometrien der Zonen der Einheit ausgewählt wird, und der Schritt d) mit dem gleichen Endelement (22) für alle Zonen der Einheit ausgeführt wird.

10. Verfahren nach einem der Ansprüche 7 bis 9, das einen vorhergehenden Schritt der Bestimmung von Informationen aufweist, die jeder zu prüfenden Zone der Struktur (5) ein Endelement (22) und einen Aktivierungsmodus der Sonde (20) zuordnen.

## Claims

1. Device (1) for non-destructively inspecting, with ultrasound, a structure (5) including a plurality of zones of different geometries, said device including:
- an ultrasonic probe (20) for emitting ultrasonic waves in the direction of the structure (5);
- an inspection head (2) to which the probe (20) is attached;
- a robot (3) including the inspection head (2); and
- a plurality of terminal elements (22), each terminal element including an attachment interface that is common to all the terminal elements (22) and a surface that is geometrically specific thereto and that matches one zone of the structure (5),
**characterized in that** the probe (20) includes a matrix array of elementary transducers (200a, 200b) that can be configured according to a plurality of different activation modes, each activation mode being defined at least by an area that is active on emission and an area that is active on reception;
and **in that** the device (1) includes:
- means for selecting a terminal element (22) from the plurality of terminal elements and means for selecting an activation mode from the plurality of activation modes of the probe (20) depending on a geometry of a zone of the structure (5);
- means the commanding an attachment, by the robot (3), of the selected terminal element (22) to the inspection head (2); and
- means for configuring the probe (20) with the selected activation mode.

2. Device (1) according to Claim 1, including means (41) for storing information associating a terminal element (22) and an activation mode with each zone to be inspected.

3. Device (1) according to Claim 2, wherein the information associates a zone of standard geometry with each zone to be inspected of the structure (5).

4. Device (1) according to one of the preceding claims, wherein the surface specific to each terminal element includes a deformable glide (222).

5. Device (1) according to one of the preceding claims, including a plurality of sets of terminal elements (22), each set being suitable for particular inspection conditions.

6. Device (1) according to one of the preceding claims, wherein an activation mode of the probe is furthermore defined by delays applied and/or weightings applied to the electrical signals of each elementary transducer of a given active emission and/or reception area.

7. Method for nondestructively inspecting, with ultrasound, a structure (5), which method is implemented by the device (1) according to one of Claims 1 to 6 and **characterized in that** it includes the following steps:
a) selecting a zone to be inspected of the structure (5) ;
b) selecting a terminal element (22) and selecting an activation mode of the probe (20) depending on a geometry of the zone to be inspected;
c) attaching the selected terminal element (22) to the inspection head (2) and configuring the probe (20) depending on the selected activation mode; and
d) positioning the inspection head (2) in the vicinity of the zone to be inspected and ultrasonically inspecting said zone;
wherein each activation mode of the probe is defined at least by an area that is active on emission and an area that is active on reception.

8. Method according to Claim 7, wherein steps a), b), c) and d) are repeated for each zone to be inspected of the structure (5).

9. Method according to Claim 7, wherein, in step a) a set of zones that are inspectable with a same terminal element (22) is selected, in step b) a terminal element (22) is selected depending on the geometries of the zones of the set, and step d) is executed with the same terminal element (22) for all the zones of the set.

10. Method according to one of Claims 7 to 9, including a prior step of determining information associating a terminal element (22) and an activation mode of the probe (20) with each zone to be inspected of the structure (5).
